# EUROPEAN PATENT APPLICATION

(11) **EP 4 834 973 A1**
(43) Date of publication of application: **04.11.2026**
(21) Application number: 24911921.5
(22) Date of filing: 09.10.2024
(51) Int. Cl.: C08G 77/20, C08K 3/013, C08K 3/22, C08K 5/10, C08L 83/05, C08L 83/07

(54) **ORGANOPOLYSILOXANE HAVING ALKENYL GROUP AT BOTH TERMINAL ENDS OF MOLECULAR CHAIN, THERMALLY CONDUCTIVE ORGANOPOLYSILOXANE COMPOSITION CONTAINING SAME, THERMALLY CONDUCTIVE MEMBER AND HEAT DISSIPATION STRUCTURE, AND OTHER COMPOSITIONS**

(30) Priority: 26.12.2023 JP 2023219740
(71) Applicant: Dow Toray Co., Ltd., Tokyo 140-8617 (JP)
(72) Inventor: OTA, Kenji, Ichihara-shi Chiba 299-0108 (JP); TERADA, Masayoshi, Ichihara-shi Chiba 299-0108 (JP); UEKI, Hiroshi, Ichihara-shi Chiba 299-0108 (JP)
(74) Representative: Elkington and Fife LLP
(86) International application number: PCT/JP2024/036109
(87) International publication number: WO 2025/142027

(57) **Abstract**

[PROBLEM]

To provide: an organopolysiloxane which, even when used as a matrix polymer in a thermally conductive organopolysiloxane composition having high thermal conductivity, can suppress the viscosity of the composition, has excellent extrusion workability when applied from a cartridge, can be optionally cured to provide a uniform crosslinking reaction product, is less prone to density reduction even under high temperature and prolonged use, can suppress the generation of voids and bubbles and can maintain the intended heat dissipation; a composition containing the organopolysiloxane, and particularly a thermally conductive composition; and the like.

[RESOLUTION MEANS]

An organopolysiloxane having alkenyl groups at both molecular chain terminals and having a Mw/Mn of 1.20 or less; a method for manufacturing the same characterized by living polymerization and end blocking of a polymer; a composition containing the organopolysiloxane, and particularly a thermally conductive organopolysiloxane composition; a thermally conductive member made therefrom; and a heat-dissipating structure using the same.

## Description

### TECHNICAL FIELD

The present invention relates to: an organopolysiloxane having alkenyl groups at both molecular chain terminals, which has a sharp molecular weight distribution and a relatively low molecular weight, and therefore exhibits excellent discharge properties from a cartridge when used as a matrix polymer for a thermally conductive organopolysiloxane, and can form a homogeneous crosslinked structure when cured; a method for manufacturing the same by living polymerization; a thermally conductive organopolysiloxane composition containing the organopolysiloxane; a thermally conductive member made therefrom; and a heat-dissipating structure using the same. Furthermore, preferably, the organopolysiloxane has a reduced amount of cyclic siloxanes with similar molecular weights that are difficult to remove by equilibrium methods, and when used as a raw material for a thermally conductive organopolysiloxane composition, it is less likely to undergo density changes even after prolonged heating, suppresses the generation of voids and bubbles, avoids contact failures, is less likely to cause mold contamination, and is alkali catalyst-free, thus having high heat resistance, and is an organopolysiloxane having alkenyl groups at both molecular chain terminals. Furthermore, the present invention relates to a composition containing an organopolysiloxane having alkenyl groups at both molecular chain terminals, such as a sealing agent or the like.

### BACKGROUND ART

In recent years, in order to efficiently dissipate the heat generated by electronic and electric equipment, such as electronic components and batteries, along with the high-density and high-integration on printed circuit boards and hybrid ICs on which electronic components, such as transistors, ICs, and memory elements, are mounted, and the increase in the capacity of secondary batteries (cell type), thermally conductive silicone compositions including organopolysiloxane, aluminum oxide powder, zinc oxide powder, and other thermally conductive fillers have been widely used, and in particular, thermally conductive silicone compositions filled with large amounts of thermally conductive filler have been proposed to respond to high heat dissipation levels. Thermally conductive silicone compositions are expected to have excellent heat resistance, and even when blended with high concentrations and high volume percentages of thermally conductive fillers, the cured product is rubber-like, and thus has a certain degree of flexibility and stress relaxation properties, maintains conformability and close adhesion to heat sources in the heat dissipating structures, and maintains heat dissipation performance. In recent years, however, there has been a tendency to demand a high content of thermally conductive filler. In general, the rubber properties derived from polymer silicone cured materials tend to be impaired when a large amount of thermally conductive filler is added. If the amount of thermally conductive filler is too high, the resulting cured product may become too hard, resulting in gaps between the cured product and the heat-dissipating object, which may impair conformability and stress relaxation properties, and in turn, may prevent sufficient heat dissipation. In other words, in curable thermally conductive silicone compositions, controlling the hardness of the thermally conductive cured product is an extremely important issue in achieving heat dissipation.

In addition, when a large amount of a thermally conductive filler is added, the fluidity of the composition itself tends to be impaired, and when attempting to fill a cartridge, dispenser, or the like with the aim of applying a small amount or a pinpoint, a sufficient extrusion amount cannot be ensured, thus inhibiting filling, particularly with the aim of packaging a small amount, and workability and coatability after adding the filler may decrease, resulting in a decrease in work efficiency. In addition, uniformly dispersing the thermally conductive filler in the silicone composition might be difficult, which may adversely affect the expected thermal conductivity, curability, and workability during commercial production. Therefore, highly thermally conductive silicone compositions containing a high amount of a thermally conductive filler, and in particular, those having a thermal conductivity of 9.0 W/mK or greater, have room for improvement in terms of performance and workability for industrial widespread use.

On the other hand, as means for obtaining a curing-reactive organopolysiloxane, a living polymerization method is known that uses hexaorganocyclotrisiloxane (D3) as a raw material and a lithium salt, sodium salt, and the like as a catalyst, and curable compositions (including curing into a gel-like state) containing these materials are also known (see Patent Documents 1 to 5). However, these documents do not disclose any significant usefulness of organopolysiloxanes that have alkenyl groups at both molecular chain terminals and relatively small molecular weights, thus providing fluidity and homogeneous crosslinking reactivity, or of a matrix polymer of a thermally conductive composition thereof. In particular, the documents do not describe or suggest anything concerning the influence of cyclic siloxanes, which cause the generation of voids and bubbles when compared to an equilibrium method.

### RELATED ART DOCUMENTS

### Patent Documents

Patent Document 1: JP 2019-163413 A (Patent No. 6907978)
Patent Document 2: JP H01-272633 A
Patent Document 3: JP H02-092933 A
Patent Document 4: JP S61-275329 A
Patent Document 5: JP H01-098631 A

### SUMMARY OF THE INVENTION

### PROBLEM TO BE SOLVED BY THE INVENTION

On the other hand, the present inventors have identified a new problem with high thermally conductive organopolysiloxane compositions that contain a large amount of a thermally conductive filler and that optionally have curing reactivity. In high thermally conductive compositions, curing-reactive organopolysiloxanes are used as matrix polymers to support thermally conductive fillers. However, when attempting to use low-viscosity organopolysiloxanes to ensure the fluidity of a composition itself, the fillability into cartridges and dispensers, and the extrusion workability during application, these organopolysiloxanes with a low degree of polymerization are mainly obtained by equilibrium polymerization. As a result, the molecular weight distribution thereof is broad and there is a lack of uniform molecular lengths, making it difficult to form uniform crosslinked products, which may lead to insufficient thermal conductivity and rubber properties. Therefore, there were challenges in the performance of these matrix polymers as thermally conductive members.

In addition, organopolysiloxanes with a low degree of polymerization obtained by equilibrium polymerization produce volatile cyclic siloxanes as by-products during manufacture thereof. When used in electronic materials, these by-products can cause contact failures in electronic components. Furthermore, even if silicones with a low degree of polymerization (e.g., 3 to 9-mer oligomers) are removed beforehand by stripping or the like, in equilibrium polymerization, volatile cyclic siloxanes can be produced as by-products over time due to the influence of the inherent alkaline catalyst, which may cause contact failure and mold contamination. Furthermore, organopolysiloxanes with a low degree of polymerization obtained by equilibrium polymerization inevitably tend to overlap in molecular weight range with cyclic siloxanes in 20-mer oligomers or smaller (specifically, 10- to 20-mer oligomers), making it difficult to sufficiently remove cyclic siloxanes with similar molecular weights. Therefore, regardless of whether a curing reaction occurs or not, if existing organopolysiloxanes with a low degree of polymerization are used as a matrix polymer in a high thermally conductive organopolysiloxane composition, prolonged use at high temperatures (aging) can cause these cyclic siloxanes to volatilize from the resulting thermally conductive member over time, which may lead to the formation of voids and bubbles, a decrease in density, and ultimately a deterioration in the performance and durability of the thermally conductive member. As a result, the originally intended heat dissipation properties may not be fully realized.

The present invention was made to solve the problems above, and an objective thereof is to provide: an organopolysiloxane having alkenyl groups at both molecular chain terminals, which, even at a relatively low viscosity and low degree of polymerization and even when used as a matrix polymer in a thermally conductive organopolysiloxane composition having high thermal conductivity and containing a very high vol.% of a thermally conductive filler, can suppress the viscosity of an ultimately obtained composition, has excellent fillability in cartridges and the like and extrusion workability during coating, can optionally be cured to provide a uniform crosslinking reaction product, does not easily decrease in density even under high temperature and prolonged use, can suppress the generation of voids and bubbles to maintain an intended heat dissipation, avoids contact failure, is less prone to mold contamination, and has high heat resistance due to being alkali catalyst-free; a thermally conductive organopolysiloxane composition containing the organopolysiloxane; a thermally conductive member made therefrom; and a heat-dissipating structure using the same.

### MEANS FOR SOLVING THE PROBLEM

As a result of extensive studies, the present inventors discovered that the problems above can be solved by an organopolysiloxane having alkenyl groups at both molecular chain terminals and having a ratio of the weight average molecular weight to the number average molecular weight (Mw/Mn) of 1.20 or less, thereby arriving at the present invention. In such organopolysiloxane, the number average molecular weight is 10000 or less, and the amount of cyclic dimethylsiloxane in 20-mer oligomers or smaller is less than 0.1 mass%. Furthermore, such organopolysiloxane can be obtained by a manufacturing method including: a step (I) for using D3 as a raw material and performing living polymerization in the presence of a lithium-based catalyst; and a step (II) for blocking the ends of the polymer obtained in step (I) with 1,3-dialkenyl-1,1,3,3-tetraorganodisilazane.

Similarly, the problems above are solved by: a thermally conductive organopolysiloxane composition containing 100 parts by mass of the organopolysiloxane having a sharp molecular weight distribution and preferably having a relatively low molecular weight and a suppressed amount of cyclic siloxanes, and a thermally conductive filler in an amount in the range from 60 to 90 vol.% relative to the total solid fraction of the composition; a thermally conductive member made therefrom; and a heat-dissipating structure using the same.

### EFFECT OF THE INVENTION

By using the organopolysiloxane having alkenyl groups at both molecular chain terminals according to the present invention as a matrix polymer, it is possible to provide: a thermally conductive organopolysiloxane composition which, even as a high thermally conductive composition in which the amount of a thermally conductive filler is high, suppresses the viscosity thereof, has excellent fillability in cartridges and the like and extrusion workability during coating, can optionally be cured to provide a uniform crosslinking reaction product, does not easily decrease in density even under high temperature and prolonged use, can suppress the generation of voids and bubbles to maintain an intended heat dissipation, avoids contact failure, is less prone to mold contamination, and has high heat resistance due to being alkali catalyst-free; a thermally conductive member made therefrom; and a heat-dissipating structure using the same. Furthermore, the present invention provides a composition that can be applied to one or more type of use selected from sealing agent compositions, electrically conductive compositions, and heat-insulating compositions, which contain the organopolysiloxane having alkenyl groups at both molecular chain terminals.

### DESCRIPTION OF THE PREFERRED EMBODIMENTS

### (A) Organopolysiloxane having alkenyl groups at both molecular chain terminals

Component (A) is an organopolysiloxane having alkenyl groups at both molecular chain terminals, a ratio of the weight average molecular weight to the number average molecular weight (Mw/Mn) of 1.20 or less, preferably in the range from 1.05 to 1.18, and more preferably in the range from 1.07 to 1.17, and a sharp molecular weight distribution, and is a characteristic component of the present invention. Such organopolysiloxane has homogeneous bonding positions and molecular lengths of alkenyl groups, which are reactive functional groups, and therefore, when used as a matrix polymer in a thermally conductive composition, the organopolysiloxane has the advantage of being less prone to density reduction and deterioration of heat dissipation properties and physical strength resulting from the density reduction, even under high temperatures and prolonged use.

Herein, from the perspective of a matrix polymer of a thermally conductive composition with a high amount of a thermally conductive filler, component (A) preferably does not have a high degree of polymerization/high viscosity in order to suppress the overall viscosity of the composition and improve the fillability into cartridges and the like extrusion workability during application. Specifically, the number average molecular weight thereof is in the range from 10000 or less, preferably 500 to 10000, more preferably 1000 to 7500, and particularly preferably 2000 to 5000. Note that if the number average molecular weight of component (A) is below the lower limit, the mechanical strength of an organopolysiloxane cured product tends to decrease. If the number average molecular weight exceeds the upper limit, the viscosity of the composition tends to increase, particularly when the amount of the resulting thermally conductive filler is high. This can result in the inability to fully achieve the desired technical effects as a low-viscosity matrix polymer, and can also lead to decreased handling workability and coatability to fine parts.

Furthermore, from the perspective of preventing contact failure and mold contamination to electronic components, and preventing a decrease in density and suppressing the generation of voids and bubbles to maintain the intended heat dissipation when a thermally conductive composition using component (A) as a raw material and a thermally conductive member made therefrom are used at high temperatures for a prolonged period of time, the amount of cyclic dimethylsiloxane in 20-mer oligomers or smaller in component (A) is preferably less than 0.1 mass%, and in particular, the amount of cyclic dimethylsiloxane in 10- to 15-mer oligomers is preferably less than 0.05 mass%. Note that as will be discussed later, these cyclic siloxanes are components that tend to be produced as by-products in equilibrium polymerization. Cyclic dimethylsiloxanes in 10- to 20-mer oligomers, and particularly 10- to 15-mer oligomers, which have molecular weights close to that of component (A), are difficult to remove from component (A) afterwards by stripping or other methods aimed at removing volatile components. Therefore, component (A) is preferably obtained by a living polymerization using D3 as a starting material. Furthermore, the amount of each of the cyclic dimethylsiloxanes in 20-mer oligomers or smaller in component (A) is preferably less than 0.1 mass% (i.e., less than 1000 ppm), the amount of each of the cyclic dimethylsiloxanes in 10- to 15-mer oligomers is particularly preferably less than 0.01 mass% (i.e., less than 100 ppm), and the sum of the amount of the cyclic dimethylsiloxanes in 20-mer oligomers or smaller is most preferably less than 0.1 mass% (i.e., less than 1000 ppm). Organopolysiloxanes with such a sharp molecular weight distribution and suppressed amount of cyclic dimethylsiloxanes in 20-mer oligomers or smaller can be obtained by a living polymerization method (to be described later).

Component (A) may include one or more type of the organopolysiloxane having alkenyl groups at both molecular chain terminals, so long as the requirements regarding molecular weight distribution and the like are satisfied. The molecular structure of such alkenyl group-containing organopolysiloxanes is preferably linear, and from the perspective of molecular length and homogeneity of a curing (crosslinking) reaction, the organopolysiloxane preferably has alkenyl groups only at both molecular chain terminals.

Examples of alkenyl groups in a molecule of component (A) include vinyl groups, allyl groups, butenyl groups, and hexenyl groups. Furthermore, examples of organic groups other than alkenyl groups in component (A) include: methyl groups and other alkyl groups; phenyl groups and other aryl groups; and monovalent hydrocarbon groups other than alkenyl groups such as 3,3,3-trifluoropropyl groups and other halogenated alkyl groups, but methyl groups or phenyl groups are preferred from an industrial perspective.

Component (A) is particularly preferably a linear alkenyl group-containing organopolysiloxane, and examples thereof include dimethylpolysiloxane blocked with dimethylvinylsiloxy groups at both molecular chain terminals and dimethylsiloxane-methylphenylsiloxane copolymers blocked with dimethylvinylsiloxy groups at both molecular chain terminals. Particularly preferred are linear dimethylpolysiloxanes having alkenyl groups with 2 to 8 carbon atoms only at both molecular chain terminals, satisfying the requirements regarding the molecular weight distribution, cyclic siloxane amount, and molecular weight range. Industrially preferred examples include dimethylpolysiloxanes blocked with dimethylvinylsiloxy groups at both molecular chain terminals.

Applicability: Including One or More Type of Use Selected from Thermally Conductive Compositions, Sealing Agent Compositions, Electrically Conductive Compositions, and Heat-Insulating Compositions
Component (A) is suitable as a matrix polymer for thermally conductive compositions as described above, but can also be used as a raw material for other curable or non-curable compositions. For example, curable or non-curable compositions containing component (A) are included within the scope of the present invention, and in particular, compositions applied to one or more type of use selected from thermally conductive compositions, sealing agent compositions, electrically conductive compositions, and heat-insulating compositions are included within the scope of the present invention. Furthermore, the scope of application of the composition is not limited to electronic materials, electronic components, and the like, but can be used for an arbitrary application.

### Manufacturing Method Using Living Polymerization

The organopolysiloxane (A) having alkenyl groups at both molecular chain terminals according to the present invention is preferably synthesized by living polymerization rather than equilibrium polymerization in order to satisfy the requirements regarding the molecular weight distribution, cyclic siloxane amount, and molecular weight range thereof. When component (A) is synthesized using equilibrium polymerization, the molecular weight distribution thereof becomes broad, preventing the achievement of uniform crosslinking reactivity. A thermally conductive composition and thermally conductive member made therefrom that use such organopolysiloxane as a matrix polymers are prone to density reduction when used at high temperatures (120°C or 150°C) for extended periods of time, which may lead to deterioration due to suppression of void and bubble formation, making it impossible to maintain the intended heat dissipation. Furthermore, in equilibrium polymerization, it is difficult to achieve an alkali catalyst-free composition, and in particular, it may be difficult to achieve high purity with an amount of cyclic dimethylsiloxanes in 20-mer oligomers or smaller of less than 0.1 mass%. This is because low-polymer cyclic dimethylsiloxanes (e.g., 10- to 20-mer oligomers) similar to component (A) may not be sufficiently removed by conventional stripping/vacuum distillation methods aimed at volatile content removal (CV). As a result, the cyclic dimethylsiloxane amount may not be sufficiently suppressed, and a sharp molecular weight distribution with an Mw/Mn ratio of 1.2 or less may not be achieved.

The living polymerization method in the present invention preferably includes a step (I) for living-polymerizing a hexaorganocyclotrisiloxane (D3) in the presence of a lithium-based catalyst using a starting material having one or more type selected from protons (H) and Li at both terminals, and a step (II) for capping the molecular chain terminals of the obtained polymer with an organosilicon compound capable of introducing an alkenyl group, wherein the blocking is performed with one or more type selected from known capping agents such as 1,3-dialkenyl-1,1,3,3-tetraorganodisilazane and alkenyl group-containing organochlorosilane. Preferably, the reaction can be performed in one or more type of polar solvent, and the use of a mixed solvent containing a polar solvent intended to accelerate the reaction is particularly preferred.

Specifically, component (A) in the present invention includes:
a step (I) of living polymerizing a hexaorganocyclotrisiloxane expressed by

   (R^{A}₂SiO)₃
(where R_{A} independently represents an alkyl group, an aryl group, or a group in which some of the hydrogen atoms bonded to carbon atoms of these groups are substituted with halogen atoms)
in the presence of a lithium-based catalyst, using a starting material having one or more type of element selected from protons (H) and Li at both ends; and a step (II) for blocking the molecular chain end on the polymerization termination side of the polymer obtained in step (I) with 1,3-dialkenyl-1,1,3,3-tetraorganodisilazane expressed by at least one type selected from

   R^{B}R^{A}₂SiNSiR^{A}₂R^{B}
(where R^{A} is the same group as described above, and R^{B} represents an alkenyl group), and
alkenyl diorganochlorosilane expressed by

   R^{B}R^{A}₂SiCl
(where R^{A} and R^{B} are the same groups as described above).

The starting material for this reaction is a substance that serves as the starting point for living polymerization, and specifically, is a starting material having one or more type of element selected from protons (H) and Li at molecular terminals. Herein, the proton (H) may be H derived from water or an OH end, and Li may be in the form of a metal salt. Specific examples of such starting materials include water, siloxane oligomers having hydroxyl groups (= silanol groups) at both molecular chain terminals, and LiOH. Note that when synthesizing a polymer having terminal alkenyl groups in high purity, a siloxane oligomer or vinyldimethylsilanol provided with the aforementioned R^{B}R^{A}₂Si end (e.g., vinyldimethylsilyl group) and OH end may be used in combination as part of the starting material. Furthermore, the amount of starting materials such as water may be adjusted, as appropriate, to improve polymerization accuracy.

The hexaorganocyclotrisiloxane (D3) expressed by

(R^{A}₂SiO)₃

is a raw material for component (A), where R^{A} independently represents an alkyl group, aryl group, or a group in which some of the hydrogen atoms bonded to carbon atoms of these groups are substituted with halogen atoms, and examples include methyl groups, ethyl groups, propyl groups, isopropyl groups, and phenyl groups. Industrially, R^{A} is either a methyl group or a phenyl group. When performing the living polymerization of the abovementioned hexaorganocyclotrisiloxane, a dewatering treatment is preferably performed using azeotropic dehydration with an organic solvent such as toluene, or using a zeolite-based drying agent such as molecular sieves or a solid drying agent such as calcium hydride.

The lithium-based catalyst is a catalyst for promoting living polymerization in the manufacturing method according to the present invention, and may be metallic lithium, lithium hydride, buterlinum, lithium hydroxide, or a mixture of two or more types thereof, with the use of lithium hydroxide being preferred. Note that using a catalyst other than these lithium-based catalysts, such as other alkali metal compounds, may reduce the yield of the desired general formula organopolysiloxane. The lithium-based catalyst may be added to the system in the form of an aqueous solution, for example, in the form of a 0.5 to 5 mass% aqueous solution, in an amount in the range from 0.005 to 0.050 mass% relative to the raw material D3.

The reaction solvent used in the living polymerization reaction according to the present invention (common to steps (I) and (II)) is not particularly limited, but a mixed solvent containing (S1) one or more type of polar solvent selected from acetonitriles, methyl ethyl ketones and methyl isobutyl ketones and (S2) one or more type of polar solvent selected from dimethyl sulfoxide and dimethylformamide is preferably used from the perspective of smooth progress of the living polymerization reaction. Herein, the polar solvent (S2) is used to promote a reaction, and the mass ratio of (S1):(S2) can be appropriately selected in the range from 9:1 to 3:1 depending on the reaction conditions and the scale of the reaction. However, this does not preclude the use of other known reaction solvents in living polymerization, such as tetrahydrofuran.

The living polymerization reaction in step (I) is a ring-opening polymerization reaction of D3, which can be performed by stirring the raw material D3 together with a lithium-based catalyst under a heating condition of 10 to 40°C, and preferably room temperature to 35°C, depending on the scale of the reaction. The reaction time is not particularly limited, but the reaction is generally performed in the range from 30 minutes to 10 hours, and preferably 2 to 8 hours, while monitoring the conversion rate of D3 using GLC (gas chromatography) or the like.

Step (II) is a step in which molecular chain terminals of the organopolysiloxane polymer obtained in step (I) are blocked with 1,3-dialkenyl-1,1,3,3-tetraorganodisilazane, thereby introducing alkenyl groups derived from the disilazanes to the molecular chain terminals of the organopolysiloxane. Herein, from the perspective of bringing the purity and molecular weight distribution of a final product closer to a single peak, low-boiling point components are preferably distilled off under reduced pressure after step (I) prior to performing step (II), and a filtration operation may be optionally performed.

Step (II) involves blocking the molecular chain end on the polymerization termination side of the organopolysiloxane polymer obtained in step (I) by at least one type selected from:
1,3-dialkenyl-1,1,3,3-tetraorganodisilazane expressed by

   R^{B}R^{A}₂SiNSiR^{A}₂R^{B}
(where R^{A} is the same group as described above, and R^{B} represents an alkenyl group); and
alkenyl diorganochlorosilane expressed by

   R^{B}R^{A}₂SiCl
(where R^{A} and R^{B} are the same groups as described above).

In the formula, R^{A} is the same group as described above, and a methyl group is preferred. Furthermore, R^{B} in the formula represents an alkenyl group, and is preferably an alkenyl group with 2 to 8 carbon atoms, and particularly preferably a vinyl group or a hexenyl group, from the perspective of the alkenyl group in the ultimately obtained component (A). Specific examples and preferred capping agents include tetramethyldivinyldisilazane and vinyldimethylchlorosilane.

Regarding the reaction conditions during blocking, an acidic catalyst such as trifluoroacetic acid (including the neutralizing salt) is preferably added to the organopolysiloxane polymer obtained in step (I) or a reaction solution containing the organopolysiloxane, and the molecular chain end blocking reaction is preferably performed at 40 to 140°C while stirring the reaction solution, with a typical reaction time of 1 to 8 hours. This reaction may also be performed without a solvent. If the reaction temperature is too low, molecular end blocking may not occur sufficiently, and if the reaction temperature is too high, the capping agents such as silazanes used for end blocking may volatilize, potentially preventing sufficient end blocking. Furthermore, if the reaction time is too short, the blocking of the molecular end may not sufficiently proceed, and it may not be possible to obtain the organopolysiloxane having alkenyl groups at both target molecular chain terminals in high purity.

After the reaction in step (II) terminals, any unreacted components, solid components, reaction residues, and the like of the original raw material components that did not participate in the polymerization reaction can be removed by a known method such as filtration and/or reduced-pressure distillation. Specifically, the conditions for reduced-pressure distillation are preferably such that the distillation is performed under a reduced pressure of 1000 Pa or less, preferably 500 Pa or less, and more preferably 300 Pa or less, at a temperature of approximately 100 to 180°C, and more preferably 120 to 150°C. Furthermore, from the perspective of ensuring the quality of component (A), the filtration process is preferably a sterilization filtration process.

Thermally Conductive Organopolysiloxane Composition

The thermally conductive organopolysiloxane composition according to the present invention is a matrix polymer, contains (A) the organopolysiloxane having alkenyl groups at both molecular chain ends, and (B) a thermally conductive filler, and preferably contains component (B) in an amount in the range from 60 to 90 vol.% relative to the total solid fraction of the composition, relative to 100 parts by mass of component (A).

Such thermally conductive organopolysiloxane composition preferably has a thermal conductivity of 9.0 W/mK or higher for the composition or a cured reaction product thereof, and may optionally be a curing reactive composition, a composition that forms a thickener, gel or cured product, or a non-curable composition such as a grease. If the composition is curing-reactive, the curing reactive group of component (A) is preferably an alkenyl group, and thus preferably has one or more type of curing reactivity selected from hydrosilylation reactivity and radical polymerization reactivity.

Furthermore, the thermally conductive organopolysiloxane composition according to the present invention may also contain (C) an organohydrogenpolysiloxane, (D) a catalytic amount of a hydrosilylation reaction catalyst, (E) an organosilicon compound that functions as a specific surface treatment agent, (F) at least one type selected from fatty acids, fatty acid esters and fatty acid metal salts, (G) a heat-resistance imparting agent, and (H) a component selected from hydrosilylation reaction inhibitors, adhesion promoters, organic solvents and other additives. The compositions of the present invention may be in the form of one-component type compositions or a multi-component type composition such as a two-component type composition. Hereinafter, each component, added amount thereof, and the like will be described.

Component (A) is a matrix polymer of the thermally conductive organopolysiloxane composition of the present invention, has a homogeneous and sharp molecular weight distribution in terms of the bonding position and molecular length of the alkenyl groups, which is the reactive functional group, and has high purity. Therefore, when used as the matrix polymer of the thermally conductive composition, component (A) has the advantage of being less prone to density reduction and resulting deterioration of heat dissipation properties and physical strength, even under high temperature and prolonged use.

This composition can be designed as either a curable or non-curable composition. Herein, the curing-reactive group is a functional group that can cure (including gelling; the same hereinafter) the entire composition by a crosslinking reaction, is an alkenyl group in component (A), and has hydrosilylation reactivity and radical polymerization reactivity.

Component (A) has alkenyl groups at both molecular chain terminals, and thus is suitable as a main agent in curable thermally conductive organopolysiloxane compositions, such as curable thermally conductive elastomers, thermally conductive gels, and curable thermally conductive gap filler materials. Note that when designing a curable composition, the composition may and preferably contains, as a curing agent (to be described later), (C) an organohydrogenpolysiloxane, and (D) a catalytic amount of a hydrosilylation reaction catalyst.

### (B) Thermally Conductive Filler

Component (B) is a thermally conductive filler for imparting thermal conductivity to the present composition and a thermally conductive member obtained by curing the present composition. Such component (B) is preferably a powder and/or a fiber of at least one or more selected from the group consisting of a pure metal, an alloy, a metal oxide, a metal hydroxide, a metal nitride, a metal carbide, a metal silicide, a carbon, a soft magnetic alloy, and a ferrite. A metallic powder, a metal oxide powder, a metal nitride powder, or carbon powder is preferable. The shape of component (B) is not particularly limited, and includes, for example, a spherical shape, a needle shape, a disk shape, a rod shape, and an indefinite shape, and is preferably a spherical shape or an indefinite shape. The average particle size of component (B) is not particularly limited, but is preferably in a range of 0.01 to 500 µm, and more preferably in a range of 0.01 to 300 µm.

Component (B) is preferably silver powder, aluminum powder, aluminum oxide powder, zinc oxide powder, magnesium oxide powder, aluminum nitride powder, boron nitride powder, or graphite. When electrical insulation is required for the present composition, a metal oxide powder or a metal nitride powder is preferable, and in particular, aluminum oxide powder, zinc oxide powder, magnesium oxide powder, or aluminum nitride powder is preferable.

Such thermally conductive filler may and preferably has a surface treated in whole or in part with an organosilicon compound, which is component (E) (to be described later). Furthermore, the powders and/or fibers that are used with these components may be treated with various surface treatment agents known as coupling agents. Surface treatment agents for treating the powders and/or fibers of component (B) include surfactants, other silane coupling agents, aluminum-based coupling agents, and silicone-based surface treatment agents, in addition to component (E).

Component (B) improves the filling efficiency, and therefore, low viscosity and high thermal conductivity can be achieved by enhancing the filling efficiency by combining large particle size powders and small particle size powders in a ratio that conforms to the maximum packing theoretical distribution curve. In the present invention, component (C) is selected from (B1) spherical and crushed aluminum oxide powder with an average particle size of 0.01 to 100 µm, (B2) spherical and crushed magnesium oxide powder with an average particle size of 0.01 to 100 µm, and (B3) irregular-shaped aluminum nitride powder with an average particle size of 0.01 to 50 µm. A mixture of two or more types with different particle sizes and shapes may and is preferably used to improve filling efficiency.

### Amount of Component (B)

In the present invention, in order to achieve high thermal conductivity, the amount of component (B) should be in the range from 60 to 90 vol.%, preferably in the range from 65 to 90 vol.%, 70 to 90 vol.%, or 70 to 85 vol.% relative to the total solid fraction in the composition (component forming cured product by curing reaction). If the amount of component (B) is below the aforementioned lower limit, the high thermal conductivity target of the present invention, in particular, a high thermal conductivity of 9.0 W/mK or more, might not be achieved. On the other hand, if the upper limit of the aforementioned range is exceeded, the viscosity of the resulting composition will be remarkably higher, or the initial cured product hardness will be quite hard, and the handling workability, stress relaxation properties, and close adhesion with respect to a base material and the like may be reduced, even if component (A) is used, and component (E) is added or used for surface-treating component (B).

Note that the amount of component (B) used is preferably in the range from 600 to 4500 parts by mass, particularly preferably in the range from 800 to 4000 parts by mass, relative to 100 parts by mass of component (A). When the amount of component (B) used is within the above range of vol.% and the amount used relative to component (A) satisfies the above range, the objectives of the present invention can be achieved particularly effectively.

### Other Inorganic Fillers

The composition of the present invention contains, as optional components, inorganic fillers such as fumed silica, wet-produced silica, crushed quartz, titanium oxide, magnesium carbonate, zinc oxide, iron oxide, diatomaceous earth, carbon black, and the like, and inorganic fillers where the surface of the inorganic filler has been hydrophobically treated with component (E) (to be described later) and/or another organosilicon compound (silazanes and the like) can be added. From the perspective of the technical effect of the present invention, and particularly high thermal conductivity, flexibility, and stress relaxation properties of the cured product, as well as close adhesion to a base material, the composition may be substantially free of fillers other than component (B). On the other hand, the above fillers may be used in combination for other functions such as improvement of mechanical strength (reinforcement) and adjustment of viscosity to the extent that the technical effect of the present invention is not impaired, and these fillers are included in one of the preferred embodiments of the present invention.

### Surface Treatment of Component (B)

Component (B) according to the present invention is preferably surface-treated using component (E) (to be described later). The surface treatment method using these components is not particularly limited, but a direct treatment method on the thermally conductive inorganic filler of component (B), an integral blend method, a dry concentrate method, or the like can be used. In the present invention, from the perspective of improving the filling properties of the composition as a whole and the adhesive strength of the cured product, a most preferable example is a heat surface treatment method, in which some or all of the aforementioned component (A) as well as component (E) are pre-mixed, and component (B) is sequentially mixed into the mixture and then heated (base heat) after homogenization. In the surface treatment method, the mixture can be heated and stirred at 100 to 200°C under reduced pressure, and the temperature conditions and stirring time can be designed based on the amount of a sample, but are preferably within a range of 120 to 180°C and 0.25 to 10 hours. Note that although the surface treatment process of component (B) is optional, from the perspective of improving fluidity, gap fill properties, and thixotropic properties of the composition, a stepwise process is acceptable, where at least a portion of component (B) is surface treated by component (E1) or (E2), followed by surface treatment of component (B) by component (E3).

The device used for mixing described above is not particularly limited, and examples include single or double-shaft continuous mixers, double rolls, Ross mixers, Hobart mixers, dental mixers, planetary mixers, kneader mixers, Henschel mixers, and the like.

### (C) Organohydrogenpolysiloxane

Component (C) is a main crosslinking agent of the composition of the present invention and while an organohydrogenpolysiloxane having two or more silicon atom-bonded hydrogen atoms in a molecule can be used without particular limitation, from the perspective of the flexibility and adhesion retention of the resulting cured product to a base material, the number (average value) of silicon atom-bonded hydrogen atoms in the organohydrogenpolysiloxane molecule preferably does not exceed 8. In particular, it is preferable to at least include (C1) a linear organohydrogenpolysiloxane having a viscosity at 25 °C of 1 to 1000 mPa-s and containing on average 2 to 4 silicon atom-bonded hydrogen atoms in a molecule, of which at least an average of 1 is in a molecular side chain.

Examples of component (C1) include: a methylhydrogen siloxane-dimethylsiloxane copolymer blocked at both molecular chain terminals with trimethylsiloxy groups and a methylhydrogen siloxane-dimethylsiloxane copolymer blocked at both molecular chain terminals with dimethylhydrogensiloxy groups. Note that these examples are non-limiting, and some of the methyl groups may be substituted with phenyl groups, hydroxyl groups, alkoxy groups, and the like.

While the viscosity of component (C1) at 25°C is not particularly limited, the viscosity is preferably in the range from 1 to 500 mPa·s, and particularly preferably in the range from 1 to 100 mPa·s. Moreover, from the perspective of preventing contact failure and the like, the amount of low molecular weight siloxane oligomer (octamethyltetrasiloxane (D4) and decamethylpentasiloxane (D5)) is preferably reduced or eliminated.

### Amount of Organohydrogenpolysiloxane (Crosslinking Agent) in Composition

The composition of the present invention particularly preferably contains component (C) in an amount that results in 0.2 to 5.0 moles, 0.3 to 3.0 moles, or 0.4 to 2.0 moles of silicon atom-bonded hydrogen atoms in component (C) with respect to 1 mole of alkenyl groups in at least component (A), from the perspective of the rubber properties, mechanical strength, and adhesive properties of the resulting organopolysiloxane cured product.

### (D) Hydrosilylation Reaction Catalyst

The hydrosilylation-reaction catalyst is a component used in curing the present composition. Examples include a platinum-based catalyst, a rhodium-based catalyst, and a palladium-based catalyst, and a platinum-based catalyst is preferred because a platinum-based catalyst can significantly promote curing of the present composition. Exemplary platinum-based catalysts include platinum fine powder, chloroplatinic acid, an alcohol solution of chloroplatinic acid, a platinum-alkenylsiloxane complex, a platinum-olefin complex, a platinum-carbonyl complex, and a catalyst in which these platinum-based catalysts are dispersed or encapsulated with a thermoplastic resin such as silicone resin, polycarbonate resin, or acrylic resin, with a platinum-alkenylsiloxane complex particularly preferable. In particular, a 1,3-divinyl-1,1,3,3-tetramethyldisiloxane complex of platinum is preferred, and is preferably added in the form of an alkenylsiloxane solution of the complex. In addition, from the perspective of improving the handling workability as well as the pot life of the composition, a platinum containing hydrosilylation reaction catalyst in microparticles dispersed and encapsulated with thermoplastic resin may be used. It should be noted that as the catalyst for promoting the hydrosilylation reaction, a non-platinum-based metal catalyst such as iron, ruthenium, iron/cobalt, or the like may be used.

On the other hand, a so-called high-energy beam-activated catalyst or photoactivated catalyst such as a (methylcyclopentadienyl)trimethyl platinum(IV) complex, bis(2,4-pentanedionato) platinum(II) complex, or the like may be used as the hydrosilylation-reaction catalyst. By using such a hydrosilylation-reaction catalyst, the composition as a whole can be cured even at low temperatures triggered by irradiation with a high energy beam, storage stability is excellent, and reaction control is facilitated. Thus, the properties of excellent handling workability may be achieved. In this case, ultraviolet light is preferred as the high energy beam from the perspective of catalytic activation efficiency, and ultraviolet light in a wavelength range of 280 to 380 nm is preferred from the perspective of industrial use. Furthermore, the irradiation dose varies depending on the type of high-energy beam-activated catalyst, but in the case of ultraviolet light, the integrated irradiation dose at a wavelength of 365 nm is preferably within a range of 100 mJ/cm² to 100 J/cm².

The amount of the hydrosilylation reaction catalyst added may be any catalytic amount, and more specifically, an amount that results in a metal atom concentration in the range from 0.01 to 500 ppm by mass, 0.01 to 100 ppm by mass, or 0.01 to 50 ppm by mass, relative to the total composition.

### (Component (E))

Component (E) is a component that functions as a surface treatment agent for component (B) and other inorganic fillers, and may coexist with these other components in the composition. From the perspective of uniform dispersion of these components and ease of handling and workability of the resulting composition, component (A) is particularly preferably surface-treated with at least a portion of component (E).

Component (E) is one or more component selected from siloxane compounds having an alkoxy group at one terminal (components (E1) and (E2)) and/or alkoxysilanes having a long-chain alkyl group (component (E3)), and more specifically, Component (E) is one or more components selected from the following components (E1) to (E3).

(E1) An organopolysiloxane having a viscosity of 10 to less than 10000 mPa•s at 25°C, expressed by general formula (1): 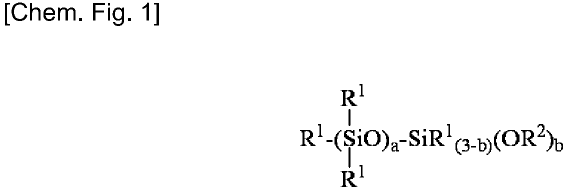 (where R¹ independently represents an unsubstituted or substituted monovalent hydrocarbon group not having a carbon-carbon double bond, and R² independently represents a hydrogen atom, alkyl group, alkoxyalkyl group, or acyl group, a is an integer from 5 to 250, and b is an integer from 1 to 3)

In General Formula (1), R¹ independently represents an unsubstituted or substituted monovalent hydrocarbon group not having a carbon-carbon double bond, and examples include linear alkyl groups, branched alkyl groups, cyclic alkyl groups, aryl groups, aralkyl groups, and alkyl halide groups. From an industrial perspective, R¹ is preferably a methyl group or a phenyl group, and is preferably a methyl group, from the perspective of heat resistance.

R² independently represents hydrogen atoms, alkyl groups, alkoxyalkyl groups, alkenyl groups, or acyl groups. From the perspective of surface treatment, R² is preferably an alkyl group, and is particularly preferably a methyl group or an ethyl group.

In General Formula (1), a is an integer in the range of 5 to 250, preferably in the range of 10 to 200. Also, b is an integer from 1 to 3, preferably 2 or 3. A suitable example of Component (E1) in the present invention is polydimethylsiloxane, where b is 3, a trialkoxysiloxy group is provided at one end of the molecular chain, and R¹ is a methyl group.

(E2) a siloxane compound having an alkenyl group and a hydrolyzable silyl group on a molecular chain end and a viscosity of 10 to less than 10000 mPa•s at 25°C, expressed by general formula (2):

R^{alk}R³₂SiO(R³₂SiO)_{c}R³₂Si-R⁴-SiR³_{(3-d)}(OR⁵)_{d}

(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3).

In general formula (2), R^{alk} represents an alkenyl group, and examples include vinyl groups, allyl groups, hexenyl groups, and other alkenyl groups with 2 to 10 carbon atoms. Component (E2) has an alkenyl group at one end of a molecular chain, and therefore may improve curability and adhesive properties when used in combination with other crosslinking agents or the like.

In the formula, R³ independently represents an unsubstituted or substituted monovalent hydrocarbon group that does not have a carbon-carbon double bond, with examples including linear alkyl groups, branched alkyl groups, cyclic alkyl groups, alkenyl groups, aryl groups, aralkyl groups, or halogenated alkyl groups, and is a methyl group or phenyl group from an industrial perspective, preferably a methyl group from the perspective of heat resistance. R⁴ represents an oxygen atom or a divalent hydrocarbon group. Examples of the divalent hydrocarbon group serving as R⁴ include: methylene groups and other alkylene groups; and ethylene oxyethylene groups, ethylene oxypropylene groups, and other alkyleneoxyalkylene groups. On the other hand, R⁴ may be and is preferably an oxygen atom.

In the formula, R⁵ independently represents a hydrogen atom, an alkyl group, an alkoxyalkyl group, or an acyl group, and is preferably an alkyl group, particularly preferably a methyl group or an ethyl group, from a surface treatment perspective. Component (G2) has a hydrolyzable silyl group in a molecule with one terminal structure expressed by Si(OR⁵), which provides excellent surface treatment effects when used in combination with component (C).

In the formula, c represents the degree of polymerization (excluding terminals) of diorganosiloxane units of component (E2), and is an integer from 1 to 250, preferably from 1 to 100, and particularly preferably from 1 to 50. The integer d in the formula is an integer from 1 to 3, preferably 3. If d represents 3, one end of component (E2) particularly preferably has a trimethoxysilyl group (-Si(OMe)₃).

The added amount of component (E1) and component (E2) (total amount when both components are used) is not particularly limited as long as the amount is sufficient for surface treatment of the filler, but as an example, the amount is in a range of 0.005 to 100 parts by mass, preferably 0.05 to 100 parts by mass, and more preferably 0.5 to 50 parts by mass, relative to 100 parts by mass of component (F) in the entire composition.

(E3) One or more type of alkoxysilane having an alkyl group with 6 or more carbon atoms in a molecule, or a hydrolysis condensate thereof.

Component (E3), similar to component (E1) and component (E2), functions as a surface treatment agent for the thermally conductive filler including Components (A) to (D) in the composition, and is a component that improves the added amount of the thermally conductive filler, improves the viscosity and fluidity of the entire composition, and also improves the adhesive properties. The alkoxysilane must have a C6 or higher alkyl group, and if an alkylalkoxysilane containing only an alkyl group of less than C6, such as a methyl group or the like, or a hydrolysis condensate thereof is used, sufficient adhesive properties may not be achievable even if used in combination with an adhesion imparting agent (to be described later).

Specific examples of the alkyl group with 6 or more carbon atoms include hexyl groups, octyl groups, dodecyl groups, tetradecyl groups, hexadecyl groups, octadecyl groups, and other alkyl groups, and benzyl groups, phenylethyl groups, and other aralkyl groups. Alkyl groups with 6 to 20 carbon atoms are particularly preferred.

Suitably, component (E3) has the following structural formula:

YₙSi(OR)₄₋ₙ

(where Y represents an alkyl group with 6 to 18 carbon atoms, R represents an alkyl group with 1 to 5 carbon atoms, and n represents a number from 1 to 3)
wherein the OR group is exemplified by methoxy groups, ethoxy groups, propoxy groups, and butoxy groups, but methoxy groups and ethoxy groups are particularly preferred. Note that n represents 1, 2, or 3, and particularly preferably represents 1.

Specific examples of this component (E3) include: C₆H₁₃Si(OCH₃)₃, C₈H₁₇Si(OC₂H₅)₃, C₁₀H₂₁Si(OCH₃)₃, C₁₁H₂₃Si(OCH₃)₃, C₁₂H₂₅Si(OCH₃)₃, C₁₄H₂₉Si(OC₂H₅)₃, and the like, and most suitably decyltrimethoxysilane.

The amount of component (E3) added is not particularly limited so long as the amount is sufficient for surface treatment of the filler, and for example, is within the range from 0.005 to 20 parts by mass relative to 100 parts by mass of component (B) in the entire composition, and is preferably 0.05 to 10 parts by mass, and more preferably 0.5 to 7.5 parts by mass.

### (F) Fatty Acid Compound

If the composition of the present invention is curable, the composition may optionally contain, in addition to the above components, at least one type of fatty acid compound selected from fatty acid esters and fatty acid metal salts. This component inhibits hardness change during heat aging of the composition and of a cured product, which is a silicone-based thermally conductive member obtained by curing the composition. In particular, when the added amount of the aforementioned thermally conductive filler is within the range above, even if component (F) is not used, there are cases where the cured product may harden rapidly during heat aging, resulting in loss of stress relaxation properties, flexibility, close base material adhesion, and the like. However, when component (F) and especially component (G) (to be described later), which is a heat resistance-imparting agent, are used together as described below in the hydrosilylation-curing reactive composition, the resulting cured product will have high thermal conductivity, maintain the initial hardness and rubber properties, and achieve favorable stress relaxation, flexibility, and close base material adhesion.

Component (F) is at least one or more type selected from fatty acid, fatty acid ester, or fatty acid metal salt, and specific examples include: fatty acids such as caproic acid, caprylic acid, peralgonic acid, capric acid, undecanoic acid, lauric acid, myristic acid, palmitic acid, stearic acid, behenic acid, and oleic acid; fatty acid esters that are alkyl esters of these fatty acids; alkali metal salts of fatty acids such as salts of sodium, lithium, and potassium; and alkaline earth metal salts of fatty acids such as salts of calcium. Preferably, component (F) is (F1) at least one or more type selected from saturated fatty acids and saturated fatty acid metal salts, and is particularly preferably (F1-1) one or more type selected from stearic acid, alkali metal salts of stearic acid, and alkaline earth metal salts of stearic acid.

Although the mechanism by which component (F) inhibits the hardness change of the cured product, particularly in combination with component (G), has not been clearly identified, it has been hypothesized that the presence of a limited amount of fatty acid compounds such as fatty acids, fatty acid salts (soaps), fatty acid esters, and the like in the silicone cured product matrix with improved heat resistance in the presence of component (G) may result in the formation of a water-resistant and lubricious thin film or local structure of these fatty acid compounds on or near the particle surface of the thermally conductive filler, thus inducing low chemical activation or inactivation of the particle surface at high temperature, and effectively preventing aggregation between surfaces and formation of coarse particles of the thermally conductive filler. However, component (F) does not need to be used as a surface treatment agent for the thermally conductive filler, and the technical effect can be achieved simply by uniformly mixing with other components. Therefore, the timing of adding component (F) to the composition of the present invention is not limited.

The amount of component (F) to be added is preferably in the range from 0.05 to 2.0 parts by mass relative to 100 parts by mass of the thermally conductive filler (total amount when a plurality of components are used). In order to achieve the aforementioned technical effects in particular, the added amount of component (F) must be within the abovementioned range, and the abovementioned range has critical significance. In other words, if the added amount of component (F) is less than the lower limit mentioned above, hardness change of the cured product may not be suppressed, even if component (F) is used together with component (G). On the other hand, if the added amount of component (F) exceeds the aforementioned upper limit, the hardness change of the cured product might not be suppressed.

### (G) Heat Resistance-Imparting Agent

In addition to the above components, the composition of the present invention may optionally contain a heat resistance imparting agent. The heat resistance-imparting agent can be added alone, but the composition and cured product of the present invention can more preferably achieve the aforementioned technical effects by containing a certain amount of the aforementioned component (F) fatty acid-based compound in combination with component (G), the heat resistance-imparting agent. The added amount of the heat resistance-imparting agent may be within the range from 0.01 to 5.0 mass% (solid fraction) of the total composition, or may be within the range from 0.05 to 2.0 mass%, or 0.07 to 0.5 mass%.

Examples of the heat resistance-imparting agent include iron oxide, titanium oxide, cerium oxide, magnesium oxide, zinc oxide, and other metal oxides, cerium hydroxide and other metal hydroxides, phthalocyanine compounds, cerium silanolate, cerium fatty acid salts, and reaction products of an organopolysiloxane with a cerium carboxylic acid salt. Particularly suitably, component (G1) is a phthalocyanine compound, for example, an additive selected from the group consisting of a metal-free phthalocyanine compound and a metal-containing phthalocyanine compound disclosed in JP 2014-503680 W is suitably used, with copper phthalocyanine compounds particularly suitable among the metal-containing phthalocyanine compounds. One example of the most suitable and non-limiting heat resistance imparting agent is 29 H, 31H-phthalocyaninato(2-)-N29, N30, N31, N32 copper. Such phthalocyanine compounds are commercially available, for example, Stan-tone (trademark) 40SP03 from PolyOne Corporation (Avon Lake, Ohio, USA.)

### (H) Hydrosilylation Reaction Inhibitor, Adhesion Promoter, Organic Solvent and Other Additives

If the composition according to the present invention is curing reactive, the composition preferably further contains component (H), and more preferably contains one or more type selected from components (F) and (G). Components (F) and (G) are particularly preferably included in combination, but the composition may further contain the following other components. In particular, if the present composition is curable, the use of a hydrosilylation reaction inhibitor is particularly preferred.

### Hydrosilylation Reaction Inhibitor

If the composition of the present invention is curable, the composition preferably contains a hydrosilylation reaction inhibitor, from the perspective of handling workability. The hydrosilylation reaction inhibitor is a component for suppressing the hydrosilylation reaction of the thermally conductive organopolysiloxane composition according to the present invention, with specific examples thereof including reaction inhibitors such as acetylenic inhibitors (such as ethynyl cyclohexanol), amine-based inhibitors, carboxylic acid ester-based inhibitors, and phosphite ester-based inhibitors. The amount of the reaction inhibitor added is usually 0.001 to 5 mass% of the entire thermally conductive organopolysiloxane composition. 3-methyl-1-butyn-3-ol, 3,5-dimethyl-1-hexyn-3-ol, and 3-phenyl-1-butyn-3-ol (= phenylbutynol), and other acetylenic compounds, 3-methyl-3-penten-1-yne, 3,5-dimethyl-3-hexen-1-yne, and other enyne compounds, 1,3,5,7-tetramethyl-1,3,5,7-tetravinylcyclotetrasiloxane, 1,3,5,7-tetramethyl-1,3,5,7-tetrahexenylcyclotetrasiloxane, and other cycloalkenylsiloxanes, and benzotriazole and other triazole compounds can be particularly used without any limitation in order to improve the handling workability of the present composition.

### Adhesion-Imparting Agent

The composition of the present invention may also contain an adhesion-imparting agent for the purpose of improving the adhesive strength of the cured product and the permanent adhesion to the base material. The adhesion-imparting agent that can be used in the present invention may be one or more type selected from the following conventionally known adhesion-imparting agents, namely, reaction mixtures of an amino group-containing organoalkoxysilane and an epoxy group-containing organoalkoxysilane (including carbasilatrane derivatives and silatrane derivatives having a specific structure), organic compounds having two or more alkoxysilyl groups in a molecule, such as disilyalkane compounds (e.g., 1,6-bis(trimethoxysilyl)hexane), and epoxy group-containing silanes or partial hydrolysis condensates thereof, and two or more types of adhesion-imparting agents selected therefrom may and preferably are used in combination.

Preferably, the adhesion-imparting agent contains:
(L-1) an epoxy group-containing silane expressed by the general formula:

   R^{a}ₙSi(OR_{b})₄₋ₙ
(where R^{a} represents an organic group containing a monovalent epoxy group, and R^{b} represents an alkyl group with 1 to 6 carbon atoms, or a hydrogen atom. n represents a number within a range of 1 to 3),
or a partial hydrolysis condensate thereof; and
(L-2) an organic compound having at least two alkoxysilyl groups in one molecule, in addition to containing a bond other than a silicon-oxygen bond between the silyl groups;
at a mass ratio of 5:95 to 95:5, preferably a mass ratio of 50:50 to 95:5, and more preferably at a mass ratio of 60:40 to 90:30.

Note that these components alone will improve the initial adhesion of organopolysiloxane cured products, but when used in combination at the mass ratio described above, the initial adhesion, adhesive durability, and adhesive strength (permanent adhesion) of the organopolysiloxane cured products may be greatly improved.

Examples of component (L-1) described above include 3-glycidoxyprolyltrimethoxysilane, 3-glycidoxypropylmethyldimethoxysilane, 2-(3,4-epoxy cyclohexyl)ethyltrimethoxysilane, and 2-(3,4-epoxy cyclohexyl)ethylmethyldimethoxysilane.

Examples of component (L-2) described above include 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, and 1,6-bis(methyldimethoxysilyl)hexane, and other disilyalkanes.

Reaction mixtures of amino group-containing organoalkoxysilanes and epoxy group-containing organoalkoxysilanes (including carbasilatrane and silatrane derivatives having specific structures) disclosed in JP S52-8854 B and JP H10-195085 A may be further used as adhesion-imparting agents other than the components (L-1) and (L-2) above.

### Organic Solvent and Other Additives

In addition to the components described above, the thermally conductive composition of the present invention may have optional components blended in to the extent that the purpose of the present invention is not impaired. Exemplary optional components include cold resistance imparting agents, flame retardants, pigments, and dyes. Furthermore, the thermally conductive composition of the present invention may optionally contain one or more type of commonly known surfactants such as antistatic agents; dielectric fillers; electrically conductive fillers; mold-release components; thixotropic agents; and antifungal agents. If desired, an organic solvent may be added.

### Manufacturing Method and Dosage Form of Composition

The thermally conductive composition of the present invention can be prepared by mixing the aforementioned components, and examples of the mixing device include the same devices as those exemplified for the surface treatment of the filler. As described above, component (F) may be added at any timing after surface treatment and base heating of the filler, or added with the surface treatment agent of the filler, and either timing can be used to achieve the technical effects of the present invention.

More specifically, the composition according to the present invention is preferably produced by either one of the following production methods (mixing process):
i) a manufacturing method including a step of mixing component (A), the filler, and component (G), followed by heating and mixing the mixture, and then optionally mixing component (F) and other components; or
ii) a manufacturing method including a step of mixing component (A), the filler, and optionally component (E) and component (G), followed by heating and mixing the mixture, and then mixing other components.

Note that the heating conditions are the same as the base heat conditions described earlier for the surface treatment of the filler, and preferably, the entire mixture is made substantially uniform during mixing.

The thermally conductive composition according to the present invention may be a one-component type composition, optionally including the aforementioned hydrosilylation reaction inhibitor and other components, or a multi-component type composition containing two or more types of compositions that are stored separately. In the case of multi-component type compositions, component (A), component (C), and component (D) described above must not be included at the same time. This is because when these components (main agent, crosslinking agent, and catalyst) are blended simultaneously, a crosslinking reaction starts spontaneously and the storage stability of the composition is lost in a short period of time, and thus the long-term storage stability and handling workability, which are objectives of a multi-component type composition, may not be achieved. Note that the multi-component type composition is coated or applied after being stirred in a common container at the time of use using a mixer or other mechanical force, or using a dispenser or the like capable of mixing a plurality of components.

The thermally conductive composition of the present invention has extremely high thermal conductivity, and the cured product thereof has excellent flexibility and stress relaxation properties. In addition, the composition can be easily extruded from a cartridge or dispenser, and has excellent work efficiency, filling properties, and coatability. Therefore, particularly even when the composition is used by filling a small amount into, for example, a small-scale syringe of about 10 to 300 mL, there is an advantage of excellent workability during application to a heat-dissipating site and during extrusion. Therefore, the present composition has an advantage of being easily filled into small-scale cartridges or syringes and is easily applicable to small-scale package production.

### Use of Non-Curable/Uncured Composition

The thermally conductive composition of the present invention can be applied in a non-curable or uncured state to a heat-dissipating component or a circuit board on which the heat-dissipating component is mounted, in order to obtain a heat-dissipating structure containing an uncured heat-dissipating member (examples of which include thermally conductive grease and uncured thermally conductive gap filler material).

### Curability

If a crosslinking agent (component (C)) is used, the thermally conductive organopolysiloxane composition according to the present invention cures via a hydrosilylation reaction to form a cured product that has excellent thermal conductivity, suppresses changes in hardness even after heat aging, and is excellent in flexibility and stress relaxation properties. While not particularly limited thereto, the temperature conditions for curing the hydrosilylation curing type composition are normally within a range of 20°C to 200°C, preferably 20°C to 150°C, and more preferably within a range of 20 to 80°C. If desired, curing may be performed in a short time at a high temperature, or curing may be performed over a long time (e.g., several hours to several days) at a low temperature such as room temperature, and there are no particular limitations. Note that curing may be triggered by irradiation of a high-energy beam by selecting a high-energy beam-activated catalyst or photoactivated catalyst as at least a portion of component (D).

By using the thermally conductive composition according to the present invention, a heat-dissipating structure can be obtained by applying the curable thermally conductive composition described above to a heat dissipating component or a circuit board on which the heat dissipating component is mounted, and forming a cured product at a temperature of 20°C to 150°C, preferably lower than 130°C, such as in a range of 20 to 125°C, in order to provide a heat dissipating member.

### Thermal Conductivity

The thermally conductive organopolysiloxane composition of the present invention has excellent discharge properties from a cartridge even when a thermally conductive filler is stably filled to a high level, forms a homogeneous crosslinked structure during curing, is less prone to density changes even after heating at high temperatures for a prolonged period, suppresses the generation of voids and bubbles, avoids contact failures, is less prone to mold contamination, and has high heat resistance due to being alkali catalyst-free.

Therefore, a thermal conductivity of 9.0 W/mK or higher is preferably provided, and particularly preferably 9.1 W/mK or higher. Note that the thermally conductive composition of the present invention allows for the design of compositions and cured products with a thermal conductivity of 9.0 to 15.0 W/mK, and optionally 9.1 to 14.0 W/mK. Said composition also offers excellent workability, such as extrudability and dispensability from cartridges, and maintains the density thereof even after high-temperature and prolonged heating, thus preserving heat dissipation properties and physical strength. Furthermore, the present composition may be non-curable or curable. If the composition is curable, the optional use of components (F) and (G) suppresses changes in hardness even after heat aging, and thus a thermally conductive cured product can be provided with excellent flexibility and stress relaxation properties.

### Application and Heat Dissipating Structure

The thermally conductive composition of the present invention and cured product thereof is useful as a heat-transferring material (thermally conductive member) to be interposed at the interface between a thermal boundary surface of a heat-generating component and a heat dissipating member such as a heat sink or a circuit board for cooling of the heat-generating component by heat conduction, and thus a heat-dissipating structure can be formed using the composition. Herein, although the type, size, and fine parts of a heat-generating component are not particularly limited, the thermally conductive composition of the present invention or the cured product obtained by curing this composition not only provides high thermal conductivity and excellent initial adhesion and adhesive strength to a member, but can also suppress changes in hardness over a long period of time, and even after heat aging can maintain flexibility and stress relaxation properties, and thus provides resistance to peeling or separating from heat-generating members due to vibration and the like, has high close adhesion and conformability, and has excellent industrial productivity, making it suitable for automotive components, electrical and electronic components, and heat dissipating structures for electrical or electronic devices including cell-type secondary batteries.

Although the structure of such a heat-dissipating structure is not particularly limited, an example is a heat dissipation structure with a heat dissipating member provided via a thermally conductive composition or cured product thereof on a heat dissipating component or a circuit board on which this heat dissipating component is mounted. Such a structure is exemplified, for example, by a structure in which an electronic component, which is a heat-dissipating component, is mounted on a circuit board and the heat generated by the electronic component is dissipated by heat dissipating members via a thin film layer of the thermally conductive composition or a cured product thereof, and these members may be preferably provided not only on a horizontal surface but also on an inclined or vertical surface because the change in hardness after heat aging is minimal, flexibility and stress relaxation of the heat dissipating member is maintained, and the close adhesion and conformability are excellent, which are the features of the present invention.

In such a heat dissipating structure, the thickness of the thermally conductive composition or cured product thereof is not particularly limited, but may be within a range of 0.1 to 100 mm to efficiently transfer heat generated from an electronic Component filled with the composition or cured product thereof without a gap to a heat dissipating member.

Electrical or electronic devices provided with a member made from the thermally conductive composition are not particularly limited, but examples include: secondary batteries such as cell-based lithium-ion electrode secondary batteries and cell-stack fuel cells; electronic circuit boards such as printed circuit boards; IC chips packaged with optical semiconductor elements such as diodes (LEDs), organic electric field elements (organic EL), laser diodes and LED arrays; CPUs used in electronic devices such as personal computers, digital video disks, mobile phones, and smartphones; and LSI chips such as driver ICs and memory. In particular, in high performance digital switching circuits formed with high integration density, heat removal (heat dissipation) is a major factor in the performance and reliability of the integrated circuits. Thermally conductive members containing the thermally conductive organopolysiloxane composition according to the present invention have superior heat dissipation and handling workability when applied to power semiconductor applications such as engine control, power train systems, air conditioner control, and the like in transportation equipment, and can also maintain a strong adhesive force with a member and achieve superior heat resistance and thermal conductivity when incorporated into in-vehicle electronic components such as electronic control units (ECU) and the like, even when used in harsh environments.

### EXAMPLES

The present invention will be described below by way of examples; however, the present invention is not limited thereto. In the Examples and Comparative Examples shown below, the following compounds or compositions were used as raw materials.

### Example 1 (Synthesis Example) *Living-Polymerized Product

A 3 L flask equipped with a stirrer, thermometer, dropping funnel, and condenser was purged with nitrogen gas. Thereafter, 1000 grams (4.50 moles) of hexamethylcyclotrisiloxane (D3) and 830 grams of toluene were added and mixed. After azeotropic dehydration for one hour, the mixture was cooled to room temperature. A mixture of 67 grams of dimethylformamide, 333 grams of acetonitrile, and 8.23 grams of a 1.5 mass% lithium hydroxide aqueous solution was added and stirred at room temperature. The conversion rate of D3 was monitored by GLC (gas chromatography), and after 3 hours and 30 minutes, when the conversion rate reached 97%, 5.13 grams of acetic acid was added to stop the polymerization. Furthermore, low-boiling-point substances were removed by heating and reduced-pressure distillation, followed by sterilization filtration. In a separate reaction flask, 891 g of the filtrate, 125 g of tetramethyldivinyldisilazane, and 0.5 g of trifluoroacetic acid were added and stirred at 80°C for two hours. Low-boiling-point substances were removed by heating and reduced-pressure distillation, and then the mixture was subjected to sterilization filtration to obtain 1024 g of a colorless, transparent solution.

The resulting reaction product had a kinematic viscosity of 27.7 mm²/s. Gel permeation chromatography (GPC) and nuclear magnetic resonance (NMR) analysis revealed that the reaction product was a polydimethylsiloxane containing vinyl groups at both molecular chain terminals, with a number average molecular weight of 3890 and a degree of dispersion (ratio of the weight average molecular weight to the number average molecular weight (Mw/Mn)) of 1.15. The amount of vinyl groups was 2.16 mass%.

Low-molecular-weight dimethylsiloxane from the polydimethylsiloxane was extracted by acetone, and quantified using n-undecane as a standard substance with a temperature-controlled GLC equipped with an FID detector. It was found that the content percentage of cyclic polydimethylsiloxane D13 was 47 ppm and the content percentage of D14 was 60 ppm.

### Comparative Example 1 (Comparative Synthesis Example) *Equilibrium-Polymerized Product

A 3 L flask equipped with a stirrer, thermometer, small Dean-Stark tube, and condenser was purged with nitrogen gas. Thereafter, 854 grams (2.89 moles) of hexamethylcyclotetrasiloxane (D4), 795 grams of polydimethylsiloxane containing vinyl groups at both terminals with a vinyl group amount of 7.6 mass%, and 0.5 g of a 25 mass% aqueous solution of tetramethylammonium hydroxide [(CH₃)₄NOH] were added and mixed. The mixture was then stirred at 80°C for three hours under a nitrogen gas stream while removing water. Thereafter, the mixture was heated to 180°C and reduced in pressure to 70 hectopascals or less, and low-boiling-point substances were removed by heating and reduced-pressure distillation. Subsequently, the mixture was subjected to sterilization filtration to obtain 1148 g of a colorless, transparent solution.

The resulting reaction product had a kinematic viscosity of 28 mm²/s. GPC and NMR analysis revealed that the reaction product was a polydimethylsiloxane containing vinyl groups at both terminals, with a number average molecular weight of 3480 and a degree of dispersion (ratio of the weight average molecular weight to the number average molecular weight (Mw/Mn)) of 1.38. The amount of vinyl groups was 2.20 mass%.

Low-molecular-weight dimethylsiloxane from the polydimethylsiloxane was extracted by acetone, and quantified using n-undecane as a standard substance with a temperature-controlled GLC equipped with an FID detector. It was found that the content percentage of cyclic polydimethylsiloxane D13 was 325 ppm and the content percentage of D14 was 254 ppm.

### Summary

The polydimethylsiloxane containing vinyl groups at both molecular chain terminals obtained by living polymerization according to the present invention (Example 1) had a molecular weight dispersity expressed as Mw/Mn of 1.15, a number average molecular weight of 3890, and the amount of cyclic siloxanes in 13-, 14-mer oligomers (D13, D14) was less than 100 ppm in both cases. In contrast, the polydimethylsiloxane containing vinyl groups at both molecular chain terminals obtained by equilibrium polymerization (Comparative Example 1) had a molecular weight dispersity expressed as Mw/Mn of 1.37, a number average molecular weight of 3480, and the amount of 13- and 14-mer oligomers (D13, D14) of cyclic siloxanes were both over 100 ppm.

### Preparation of Composition and Preparation of Thermally Conductive Organopolysiloxane Cured Product (Evaluation Sample)

The components were mixed by the method described below to obtain the thermally conductive compositions of Example 2 and Comparative Example 2 (hereinafter sometimes referred to as "thermally conductive organopolysiloxane compositions"). The thermally conductive organopolysiloxane composition was filled into a mold having a height of 6 mm, a length of 50 mm, and a width of 30 mm, and cured at 80°C for 30 minutes. The composition was then removed from the mold to obtain a thermally conductive organopolysiloxane cured product. The hardness of the resulting thermally conductive organopolysiloxane cured product was measured by the following method.

### Hardness (Type E Hardness)

Hardness was measured by overlapping two thermally conductive organopolysiloxane cured products obtained under the above conditions and measuring the value after 3 seconds using an ASKER TYPE E hardness tester manufactured by ASKER.

### Thermoelectric Conductivity

Thermal conductivity was measured using two pieces of thermally conductive organopolysiloxane cured product obtained under the above conditions using a TPS-500 (hot disk method) manufactured by Kyoto Electronics Industry Co.

### Density and Density Change

The density was measured using a thermally conductive organopolysiloxane cured product obtained under the conditions above. The specific gravity in water was measured using an EW-300SG manufactured by Alpha Mirage Co., Ltd., and then converted to density.

The density change was calculated from the initial density of the thermally conductive organopolysiloxane cured product obtained under the above conditions and the density of the same cured product after aging in a 120°C or 150°C oven for 100 hours.

When voids are formed inside the material due to aging, the density decreases from the initial density, and it can be determined that internal bubbles and cracks have occurred.

### Extrusion Amount

The extrusion amount was measured in terms of the weight extruded per minute by filling a 30 cc EFD syringe (manufactured by Nordson Corporation) with the thermally conductive composition and extruding the composition at an extrusion pressure of 80 psi.

The composition of the present invention is formed using each of the following components.

### Component (A):

A-P: Dimethylpolysiloxane blocked at both molecular chain terminals with dimethylvinylsiloxy groups (molecular weight dispersity: 1.15, number average molecular weight: 3890, Vi amount: 2.16 mass%) *Example 1
A-C: Dimethylpolysiloxane blocked at both molecular chain terminals with dimethylvinylsiloxy groups (molecular weight dispersity: 1.37, number average molecular weight: 3480, Vi amount: 2.20 mass%) *Comparative Example 1

### Component (B):

B-1: Irregular zinc oxide powder with an average particle size of 0.12 µm
B-2: Polyhedral spherical α-type aluminum oxide powder with an average particle size of 2 µm
B-3: Irregular aluminum nitride powder with an average particle size of 30 µm
B-4: Spherical aluminum nitride powder with an average particle size of 80 µm
B-5: Spherical magnesium oxide powder with an average particle size of 120 µm

### Component (C):

C-1: Methylhydrogensiloxane-dimethylsiloxane copolymer blocked at both molecular chain terminals with trimethylsiloxy groups, average of 2 in a molecule, average of 2 in a molecular side chain (viscosity: 20 mPa·s, Si-H amount: 0.10 mass%)
C-2: Methylhydrogensiloxane-dimethylsiloxane copolymer blocked at both molecular chain terminals with trimethylsiloxy groups, average of 5 in a molecule, average of 5 in a molecular side chain (viscosity: 5 mPa·s, Si-H amount: 0.75 mass%)

### Component (D):

D-1: Complex of platinum and 1,3-divinyl-1,1,3,3-tetramethyldisiloxane with a platinum concentration of 0.6 wt.%

### Component (E):

E-1:

   Formula: (CH₃)₃SiO[(CH₃)₂SiO]₃₀Si(OCH₃)₃
Organopolysiloxanes represented by
E-2: Decyltrimethoxysilane

### Component (F):

F-1: Calcium stearate (Fujifilm Wako Pure Chemicals)

### Component (G):

G-1: 29H, 31H-phthalocyaninato(2-)-N29, N30, N31, N32-copper

### Component (H):

H-1: Phenylbutynol

### Example 2: Two-Component Type Thermally Conductive Organopolysiloxane Composition According to Example 1

100.0 parts by mass of component (A-P), 58.8 parts by mass of component (E-1), 7.84 parts by mass of component (E-2), and 3.92 parts by mass of component (F-1) were weighed, and over 60 minutes, 647 parts by mass of component (B-1), 1157 parts by mass of component (B-2), 706 parts by mass of component (B-3), 424 parts by mass of component (B-4), and 813 parts by mass of component (B-5) were mixed in sequence. Thereafter, the mixture was uniformly mixed for 30 minutes. After homogenization, the mixture was heated and mixed at 160 °C for 60 minutes under reduced pressure, and then cooled to room temperature. 0.89 parts by mass of component (D-1) was uniformly mixed into the mixture to obtain solution (I) of the thermally conductive organopolysiloxane composition.

Next, 39.2 parts by mass of component (A-P), 51.0 parts by mass of component (C-1), 58.8 parts by mass of component (E-1), 7.84 parts by mass of component (E-2), and 3.92 parts by mass of component (F-1) were weighed, and over 60 minutes, 647 parts by mass of component (B-1), 1157 parts by mass of component (B-2), 706 parts by mass of component (B-3), 424 parts by mass of component (B-4), and 813 parts by mass of component (B-5) were mixed in sequence. Thereafter, the mixture was uniformly mixed for 30 minutes. After homogenization, the mixture was heated and mixed at 160 °C for 60 minutes under reduced pressure, and then cooled to room temperature. 2.0 parts by mass of component (C-2), 3.92 parts by mass of component (G -1), and 0.12 parts by mass of component (H-1) were uniformly mixed into the mixture to obtain solution (II) of the thermally conductive organopolysiloxane composition.

After measuring the extrusion volume using the abovementioned thermally conductive organopolysiloxane composition solutions (I) and (II), the hardness, thermal conductivity, density, and density change were measured after mixing both solutions in equal mass.

### Comparative Example 2: Two-Component Type Thermally Conductive Organopolysiloxane Composition According to Comparative Example 1

A thermally conductive organopolysiloxane composition was obtained in the same manner as in Example 2, except that component (A-P) in Example 2 was replaced with component (A-C).

Table 1 shows the composition and extrusion amount of the thermally conductive organopolysiloxane compositions of Example 2 and Comparative Example 2 as well as the thermal conductivity, hardness, density, and density change after heating and aging, and the like of the resulting thermally conductive organopolysiloxane cured products.

**[Table 1]**

| Experiment No. (parts by mass) | Example 2 | | Comparative Example 2 | |
|---|---|---|---|---|
| | Solution (I) | Solution (II) | Solution (I) | Solution (II) |
| A-P (Example 1) | 100.0 | 39.2 | | |
| A-C (Comparative Example 1) | | | 100.0 | 39.2 |
| B-1 | 647 | 647 | 647 | 647 |
| B-2 | 1157 | 1157 | 1157 | 1157 |
| B-3 | 706 | 706 | 706 | 706 |
| B-4 | 424 | 424 | 424 | 424 |
| B-5 | 813 | 812 | 813 | 812 |
| C-1 | | 51.0 | | 51.0 |
| C-2 | | 2.0 | | 2.0 |
| D-1 | 0.89 | | 0.89 | |
| E-1 | 58.8 | 58.8 | 58.8 | 58.8 |
| E-2 | 7.84 | 7.84 | 7.84 | 7.84 |
| F-1 | 3.92 | 3.92 | 3.92 | 3.92 |
| G-1 | | 3.92 | | 3.92 |
| H-1 | | 0.12 | | 0.12 |
| Molar ratio of SiH/alkenyl group | 0.56 | | 0.56 | |
| Amount of component (B) (vol.%) | 85.0 | | 85.0 | |
| Extrusion rate (g/min) | 82 | 75 | 83 | 75 |
| Thermal conductivity (W/m·K) | 11.3 | | 10.7 | |
| Type E hardness | 33 | | 19 | |
| Density (g/cm³) (Initial) | 3.2 | | 3.2 | |
| Density change (%) (after 100 hours at 120°C) | +0.6 | | -2.0 | |
| Density change (%) (after 100 hours at 150°C) | +0.5 | | -4.1 | |

### Summary

The thermally conductive organopolysiloxane composition according to Example 2, which used A-P (dimethylpolysiloxane blocked with dimethylvinylsiloxy groups at both molecular chain terminals) obtained by Example 1 (living polymerization), achieved a high thermal conductivity exceeding 11 W/m·K. Moreover, the density change thereof after 100 hours at high temperatures (120°C or 150°C) was within 1%, the generation of voids and bubbles was suppressed, and the discharge properties (extrusion workability) thereof from the cartridge were also favorable. Therefore, the thermally conductive organopolysiloxane composition according to the examples of the present application is strongly expected to maintain the expected heat dissipation properties and mechanical strength thereof, such as rubber properties, even when used for prolonged periods at high temperatures, in addition to handling workability.

In contrast, the thermally conductive organopolysiloxane composition according to Comparative Example 2, which used A-C (dimethylpolysiloxane blocked with dimethylvinylsiloxy groups at both molecular chain terminals) obtained by Comparative Example 1 (equilibrium polymerization), exhibited favorable results in thermal conductivity, hardness, and discharge properties from the cartridge (extrusion workability), similar to Example 2. However, after 100 hours at high temperatures (120°C or 150°C), the composition underwent a large density change, and the density reduction rate due to the generation of voids and bubbles was significant. Therefore, in the case of the thermally conductive organopolysiloxane of Comparative Example 2, there is concern that the heat dissipation properties and mechanical strength thereof, such as rubber properties, may deteriorate, particularly when used for prolonged periods at high temperatures.

## Claims

1. An organopolysiloxane, comprising alkenyl groups at both molecular chain terminals, wherein the ratio of the weight average molecular weight to the number average molecular weight (Mw/Mn) is 1.20 or less.

2. The organopolysiloxane according to claim 1, wherein the number average molecular weight is 10000 or less, and the amount of cyclic dimethylsiloxane in 20-mer oligomers or smaller is less than 0.1 mass%.

3. The organopolysiloxane according to claim 1, which is a linear dimethylpolysiloxane having alkenyl groups with 2 to 8 carbon atoms only at both molecular chain terminals, wherein the amount of cyclic dimethylsiloxane in 10- to 20-mer oligomers is less than 0.1 mass%.

4. The organopolysiloxane according to claim 1, which is a linear dimethylpolysiloxane having alkenyl groups with 2 to 8 carbon atoms only at both molecular chain terminals, wherein the ratio of the weight average molecular weight to the number average molecular weight (Mw/Mn) is in the range from 1.05 to 1.18, the number average molecular weight is in the range from 2000 to 5000, and the amount of cyclic dimethylsiloxane in 10- to 15-mer oligomers is less than 0.01 mass%.

5. A method for manufacturing the organopolysiloxane according to any one of claims 1 to 4, the method comprising:
a step (I) for living polymerizing a hexaorganocyclotrisiloxane expressed by
(R^{A}₂SiO)₃
(where R^{A} independently represents an alkyl group, an aryl group, or a group in which some of the hydrogen atoms bonded to carbon atoms of these groups are substituted with halogen atoms)
in the presence of a lithium-based catalyst; and
a step (II) for blocking the molecular chain end on the polymerization termination side of the polymer obtained in step (I) with at least one type selected from
1,3-dialkenyl-1,1,3,3-tetraorganodisilazane expressed by
R^{B}R^{A}₂SiNSiR^{A}₂R^{B}
(where R^{A} is the same group as described above, and R^{B} represents an alkenyl group)
and
alkenyl diorganochlorosilanes expressed by
R^{B}R^{A}₂SiCl
(where R^{A} and R^{B} are the same groups as described above).

6. The method for manufacturing an organopolysiloxane according to claim 5, wherein in steps (I) and (II), a reaction solvent is a mixed solvent containing (S1) one or more type of polar solvent selected from acetonitriles, methyl ethyl ketones and methyl isobutyl ketones, and (S2) one or more type of polar solvent selected from dimethyl sulfoxides and dimethylformamides.

7. A thermally conductive organopolysiloxane composition, comprising:
(A) 100 parts by mass of the organopolysiloxane according to any one of claims 1 to 4; and
(B) a thermally conductive filler in an amount that ranges from 60 to 90 vol.% relative to the total solid fraction in the composition.

8. The thermally conductive organopolysiloxane composition according to claim 7, which is non-curable.

9. The thermally conductive organopolysiloxane composition according to claim 7, comprising one or more type of curing reactivity selected from hydrosilylation reactivity and radical polymerization reactivity.

10. The thermally conductive organopolysiloxane composition according to claim 7, further comprising:
(C) an organohydrogenpolysiloxane in an amount such that the amount of silicon atom-bonded hydrogen atoms in component (C) is 0.2 to 5 moles within respect to 1 mole of curing-reactive groups with a carbon-carbon double bond in component (A); and
(D) a catalytic amount of a hydrosilylation reaction catalyst,
the thermally conductive organopolysiloxane composition having hydrosilylation reactivity.

11. The thermally conductive organopolysiloxane composition according to claim 7, further comprising (E) one or more type of component selected from:
(E1) An organopolysiloxane having a viscosity of 10 to less than 10000 mPa• s at 25°C, expressed by general formula (1): 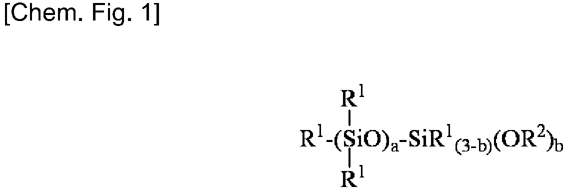
(where R¹ independently represents an unsubstituted or substituted monovalent hydrocarbon group not having a carbon-carbon double bond, and R² independently represents a hydrogen atom, alkyl group, alkoxyalkyl group, or acyl group, a is an integer from 5 to 250, and b is an integer from 1 to 3);
(E2) a siloxane compound having an alkenyl group and a hydrolyzable silyl group on a molecular chain end and a viscosity of 10 to less than 10000 mPa•s at 25°C, expressed by general formula (2):
R^{alk}R³₂SiO(R³₂SiO)_{c}R³₂Si-R⁴-SiR³_{(3-d)}(OR⁵)_{d}
(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3); and
(E3) an alkoxysilane having an alkyl group with 6 or more carbon atoms in a molecule, or a hydrolysis condensate thereof.

12. The thermally conductive organopolysiloxane composition according to claim 7, further comprising one or more type of component selected from:
(F) at least one type selected from fatty acids, fatty acid esters and fatty acid metal salts; and
(G) a heat resistance-imparting agent.

13. The thermally conductive organopolysiloxane composition according to any one of claims 7 to 12, wherein the thermal conductivity of the composition or a cured reaction product thereof is 9.0 W/mK or more.

14. The thermally conductive organopolysiloxane composition according to any one of claims 7 to 13, wherein the density change of the composition or a cured reaction product thereof is within 1% even after 100 hours at 150°C has passed.

15. A thermally conductive member, comprising the thermally conductive organopolysiloxane composition according to any one of claims 7 to 13 or a cured reaction product thereof.

16. A heat dissipating structure, comprising the thermally conductive member according to claim 15.

17. A heat dissipating structure, comprising a heat dissipating member provided via the thermally conductive organopolysiloxane composition according to any one of claims 7 to 13 or a cured reaction product thereof on a heat dissipating component or a circuit board on which the heat dissipating component is mounted.

18. The heat dissipating structure according to claim 16 or claim 17, which is an electrical or electronic device.

19. The heat dissipating structure according to claim 16 or claim 17, which is an electrical or electronic component or a secondary battery.

20. A method of manufacturing a heat dissipating structure, the method comprising:
a step for applying the thermally conductive composition according to any one of claims 7 to 12 to a heat dissipating component or a circuit board on which the heat dissipating component is mounted, and then curing at a temperature lower than 130°C.

21. A composition applicable to one or more type of use selected from sealing agent compositions, electrically conductive compositions and heat-insulating compositions, the composition comprising the organopolysiloxane according to any one of claims 1 to 4.
